(19) Europäisches Patentamt
European Patent Office
Office européen des brevets

(11) **EP 3 226 576 A1**

(12) **EUROPEAN PATENT APPLICATION**
published in accordance with Art. 153(4) EPC

(43) Date of publication:
**04.10.2017 Bulletin 2017/40**

(51) Int Cl.:
***H04Q 11/00*** (2006.01)

(21) Application number: **14908198.6**

(22) Date of filing: **18.12.2014**

(86) International application number:
**PCT/CN2014/094229**

(87) International publication number:
**WO 2016/095163 (23.06.2016 Gazette 2016/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventors:
• **ZHANG, Chunhui
Shenzhen
Guangdong 518129 (CN)**

• **CAI, Yu
Shenzhen
Guangdong 518129 (CN)**
• **FU, Hongyan
Shenzhen
Guangdong 518129 (CN)**

(74) Representative: **Maiwald Patentanwalts GmbH
Engineering
Elisenhof
Elisenstrasse 3
80335 München (DE)**

(54) **OPTICAL SWITCH CHIP, OPTICAL SWITCH DRIVING MODULE, AND DRIVING METHOD**

(57) An optical switch chip, an optical switch driving module, and an optical switch driving method are disclosed. An optical switch unit in an optical switch matrix may be driven by using driving signals of different frequencies. The optical switch driving module includes an optical switch chip, and the optical switch chip includes multiple optical switch units (110). The optical switch units (110) are divided into N groups, where N is a natural number greater than or equal to 1. Each group of optical switch units (110) shares a pair of electrodes (101, 102), each pair of electrodes (101, 102) is configured to connect to a multi-frequency driving signal source (200), and

each optical switch unit (110) is connected to a band-pass filter (120) and connects to the multi-frequency driving signal source (200) by using the band-pass filter (120). Pass bands of M band-pass filters (120) that are connected to M optical switch units (110) in a same group are different, where M is a natural number greater than or equal to 2. The multi-frequency driving signal source (200) outputs multiple driving signals of different frequencies that are respectively corresponding to the M band-pass filters (120), so as to drive the optical switch unit (110).

FIG. 1

Printed by Jouve, 75001 PARIS (FR)

**Description**

**TECHNICAL FIELD**

The present invention relates to the field of optical communications technologies, and in particular, to an optical switch chip, an optical switch driving module, and an optical switch driving method.

**BACKGROUND**

An optical communications network mainly includes three parts: a transport network, a switching network, and an access network. An electrical switch in the switching network is faced with technical limits of a switching speed, energy consumption, and the like, and cannot meet a requirement of a large switching throughput when high bandwidth is required. As an optical signal switching technology of low energy consumption and a large throughput, an all-optical switching technology is to replace an electrical switching technology and become a main technology in a future switching network.

A core component for implementing the all-optical switching technology is an optical switch matrix. The optical switch matrix is formed by a particular quantity of optical switch units according to a regular topology structure. A switching scale in which both a quantity of input ports of the optical switch matrix and a quantity of output ports of the optical switch matrix are N is called an N x N switching scale. In the N x N switching scale, a total quantity of optical switch units that the optical switch matrix requires may be $N^2$. Each optical switch unit requires one or two phase shifters. The phase shifter can enable, merely in a specific direct current voltage or current, the optical switch unit to be in a direct-connected state or a cross-connected state. Therefore, each optical switch unit needs to be configured with and driven by an independent DAC (digital-to-analog conversion) driving unit, and one optical switch matrix generally needs to be driven by many DAC driving units.

For example, an optical switch module includes a main chip, a phase shifter, a DAC driving unit, and the like. The main chip includes an optical switch matrix, and the main chip is surrounded by a circle of electrodes, where each electrode is configured to connect to a corresponding phase shifter and DAC driving unit, and the DAC driving unit can drive a corresponding optical switch unit.

However, as a scale of the optical switch matrix increases, when optical switch units reach a particular quantity, even if the main chip is fully surrounded by electrodes, a quantity of electrodes of the main chip still cannot match the quantity of optical switch units, and consequently some optical switch units cannot be driven normally.

**SUMMARY**

Embodiments of the present invention provide an optical switch driving module and an optical switch driving method that can reduce a quantity of used electrodes.

A first aspect of the present invention provides an optical switch driving module, including an optical switch chip and a multi-frequency driving signal source that is connected to the optical switch chip; the optical switch chip includes an optical switch matrix, and optical switch units of the optical switch matrix are divided into N groups, where N is a natural number greater than or equal to 1; each group of optical switch units shares a pair of electrodes, each pair of electrodes is configured to connect to a multi-frequency driving signal source, and each optical switch unit is connected to a band-pass filter and connects to the multi-frequency driving signal source by using the band-pass filter; pass bands of M band-pass filters that are connected to M optical switch units in a same group are different, where M is a natural number greater than or equal to 2; and the multi-frequency driving signal source outputs multiple driving signals of different frequencies that are respectively corresponding to the pass bands of the M band-pass filters, so as to drive the group of optical switch units.

Further, the optical switch unit includes a coupler and a phase shifter, one end of the band-pass filter is connected to the phase shifter, the other end of the band-pass filter is connected to one of the pair of electrodes, and the other one of the pair of electrodes is a common end; and two ends of the multi-frequency driving signal source are respectively connected to the pair of electrodes.

Further, the band-pass filter includes a capacitor C and an inductor L that are connected in series, and a resonance frequency of the band-pass filter is $\omega = \sqrt{\dfrac{1}{LC}}$.

Further, the filter includes a first capacitor, a second capacitor, and a resistor; one end of the first capacitor is connected to the phase shifter, and the other end of the first capacitor is connected to a node; one end of the resistor is connected to the node, and the other end of the resistor is connected to one of the pair of electrodes; one end of the second capacitor is connected to the node, and the other end of the second capacitor and the phase shifter are both connected to the other one of the pair of electrodes; and the phase shifter and the first capacitor form a low-pass filter, the second capacitor and the resistor form a high-pass filter, and the band-pass filter is a filter formed by cascading one or multiple low-pass filters and one or multiple high-pass filters.

Further, the band-pass filter includes one or multiple active filters, and the active filter includes an integrated operational amplifier and multiple capacitors and resistors that are connected to the integrated operational amplifier.

Further, amplitude of a signal output by the multi-frequency driving signal source is adjustable.

Further, the multi-frequency driving signal source includes a multi-frequency signal source, an integrated operational amplifier, and multiple LC resonant circuits; the multi-frequency signal source is connected to a non-inverting input end of the integrated operational amplifier, the LC resonant circuit is connected to an inverting input end of the integrated operational amplifier, and a resistor is connected between the inverting input end and an output end of the integrated operational amplifier; each LC resonant circuit includes an adjustable resistor; and when a frequency of a signal output by the multi-frequency signal source is the same as a resonance frequency of the LC resonant circuit, an amplification multiple of the signal output by the multi-frequency signal source is a ratio of a resistance value of the resistor to a resistance value of the adjustable resistor.

Further, the multi-frequency driving signal source includes multiple signal sources that output signals of different frequencies; and after being superimposed, the signals output by the multiple signal sources are output by a high-speed DAC, where a signal output by the high-speed DAC includes components of driving signals of different frequencies.

Further, the optical switch driving module further includes an anti-crosstalk module; when receiving an optical switch status switching request, the anti-crosstalk module calculates a driving power that a corresponding phase shifter requires, and calculates a driving signal power that a multi-frequency signal source needs to generate; and the multi-frequency signal source generates a driving signal according to the driving signal power that the multi-frequency signal source needs to generate.

A second aspect of the present invention provides an optical switch chip that includes multiple optical switch units, where the multiple optical switch units are divided into N groups, and N is a natural number greater than or equal to 1; each group of optical switch units shares a pair of electrodes, each pair of electrodes is configured to connect to a multi-frequency driving signal source, and each optical switch unit is connected to a band-pass filter and connects to the electrodes by using the band-pass filter; and pass bands of M band-pass filters that are connected to M optical switch units in a same group are different, where M is a natural number greater than or equal to 2.

Further, the optical switch unit includes a coupler and a phase shifter, one end of the band-pass filter is connected to the phase shifter, the other end of the band-pass filter is connected to one of the pair of electrodes, and the other one of the pair of electrodes is a common end; and two ends of the multi-frequency driving signal source are respectively connected to the pair of electrodes.

Further, the band-pass filter includes a capacitor C and an inductor L that are connected in series, and a resonance frequency of the band-pass filter is $\omega = \sqrt{\frac{1}{LC}}$.

Further, the filter includes a first capacitor, a second capacitor, and a resistor; one end of the first capacitor is connected to the phase shifter, and the other end of the first capacitor is connected to a node; one end of the resistor is connected to the node, and the other end of the resistor is connected to one of the pair of electrodes; one end of the second capacitor is connected to the node, and the other end of the second capacitor and the phase shifter are both connected to the other one of the pair of electrodes; and the phase shifter and the first capacitor form a low-pass filter, the second capacitor and the resistor form a high-pass filter, and the band-pass filter is a filter formed by cascading one or multiple low-pass filters and one or multiple high-pass filters.

Further, the band-pass filter includes one or multiple active filters, and the active filter includes an integrated operational amplifier and multiple capacitors and resistors that are connected to the integrated operational amplifier.

A third aspect of the present invention provides an optical switch driving method, including: dividing optical switch units of an optical switch matrix into N groups, where N is a natural number greater than or equal to 1; each group of optical switch units shares a pair of electrodes, each pair of electrodes is configured to connect to a multi-frequency driving signal source, and each optical switch unit is connected to a band-pass filter and connects to the multi-frequency driving signal source by using the band-pass filter; and pass bands of M band-pass filters that are connected to M optical switch units in a same group are different, where M is a natural number greater than or equal to 2; and outputting, by the multi-frequency driving signal source, multiple driving signals of different frequencies that are corresponding to the pass bands of the M band-pass filters, so as to drive the group of optical switch units.

Further, the optical switch driving method further includes: when the optical switch unit is a low-speed switch, adjusting amplitude of a driving signal to drive the optical switch unit.

Further, each optical switch unit includes a coupler and a phase shifter, and the band-pass filter is formed by connecting a capacitor and an inductor in series to a driving loop of each phase shifter.

Further, each optical switch unit includes a coupler and a phase shifter, and the band-pass filter is formed by cascading one or multiple low-pass filters and one or multiple high-pass filters.

Further, the band-pass filter includes an active filter.

Further, the band-pass filter is formed by cascading multiple levels of active band-pass filters or cascading multiple levels of active low-pass filters and active high-pass filters.

Further, the optical switch driving method further includes: when an optical switch status switching request is received, calculating a driving power that a phase shifter of an optical switch unit requires; calculating driving signal power that a multi-frequency signal source needs to generate; and generating, by the multi-frequency signal source, a driving signal according to the driving signal power that the multi-frequency signal source needs to generate.

In the foregoing optical switch driving module and the optical switch driving method, an optical switch is driven by using alternating current signals of multiple frequencies. This method can be used to enable phase shifters of different optical switches to be connected to an exterior of a chip by using a same electrode, so as to effectively reduce a quantity of electrodes.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a circuit diagram of an optical switch driving module according to an implementation manner of the present invention;
FIG. 2 is a composition diagram of an optical switch unit according to an embodiment;
FIG. 3 is a composition diagram of an optical switch according to another embodiment;
FIG. 4a and FIG. 4b are a status change diagram of an optical switch unit when amplitude of a direct current driving signal changes;
FIG. 5a and FIG. 5b are a status change diagram of an optical switch unit when amplitude of an alternating current driving signal changes;
FIG. 6 shows a specific circuit diagram of a filter according to a first embodiment;
FIG. 7 shows a specific circuit diagram of a filter according to a second embodiment;
FIG. 8 shows a specific circuit diagram of a filter according to a third embodiment;
FIG. 9 shows a specific circuit diagram of a multi-frequency driving signal source according to a fourth embodiment;
FIG. 10 shows a composition diagram of a multi-frequency driving signal source according to a fifth embodiment;
FIG. 11 shows a composition module diagram of an optical switch driving module according to a sixth embodiment;
FIG. 12 is a flowchart of an anti-crosstalk method according to an embodiment of the present invention; and
FIG. 13 is a method flowchart of an optical switch driving method according to an implementation manner of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

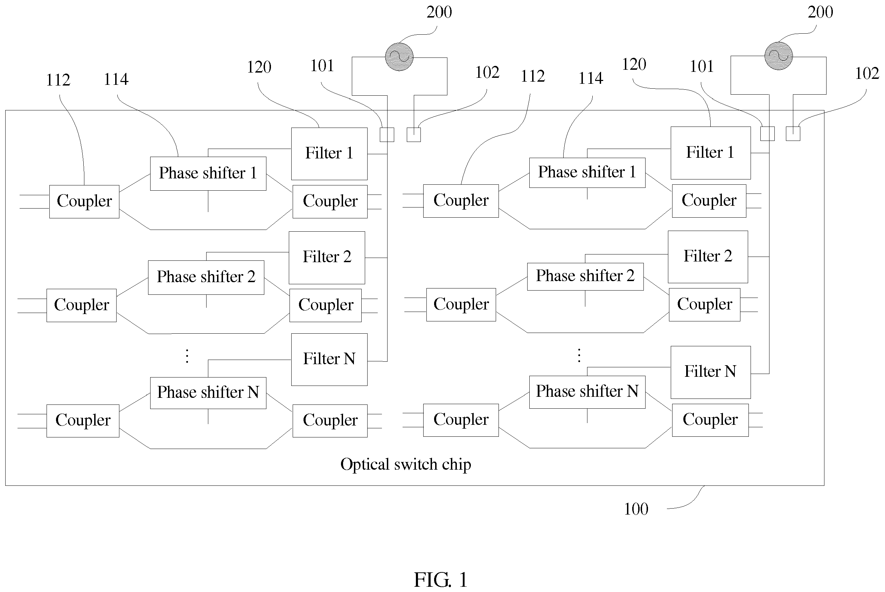

Referring to FIG. 1, in an implementation manner, an optical switch driving module includes an optical switch chip 100 and M multi-frequency driving signal sources 200 that are connected to the optical switch chip 100, where M is a natural number greater than or equal to 1.

Referring to FIG. 1 to FIG. 3, the optical switch chip 100 includes multiple optical switch units 110 and multiple filters 120. The optical switch units are divided into M groups, and each group of optical switch units shares a multi-frequency driving signal source 200. A quantity of optical switch units in each group is N, where N is a natural number greater than or equal to 2. A phase shifter 114 of each optical switch unit 110 is connected to a corresponding multi-frequency driving signal source 200 by using a filter 120. The optical switch chip 100 includes M pairs of electrodes 101 and 102, and each pair of electrodes is connected to a multi-frequency driving signal source 200. One end of the filter 120 is connected to a corresponding phase shifter 114, and the other end of the filter 120 is connected to the electrode 101. The electrode 102 is a common end electrode. A function of the common end electrode is current return, and the common end electrode may be directly connected to one end of a phase shifter, or to a common ground of the chip.

The filter 120 is a band-pass filter, and allows only a signal of a specific frequency to drive a corresponding phase shifter. Pass bands of N band-pass filters that are connected to N optical switch units 110 in a same group are different. A multi-frequency driving signal source 200 connected to each group of optical switch units can provide driving signals of multiple frequencies, and the frequencies of the driving signals respectively correspond to the pass bands of the band-pass filters. Amplitude of a driving signal of each frequency can be independently adjusted, and different optical switch units can be controlled by adjusting amplitude or power values of different frequency components.

Phase shifters of optical switch units in a same group require different driving signal frequencies. Phase shifters of optical switch units in different groups may use a same frequency, but the phase shifters need to be connected to different electrodes.

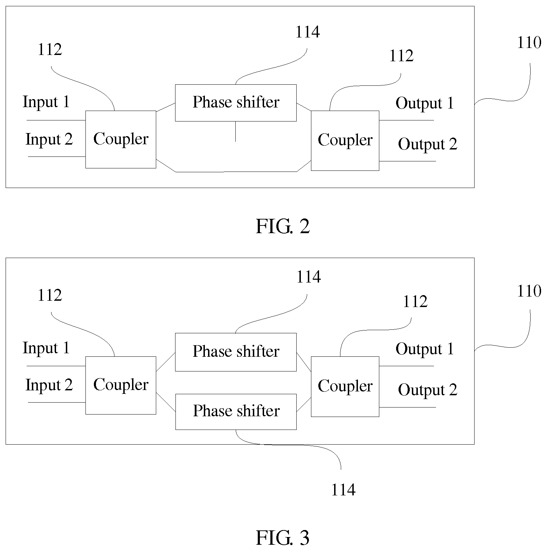

In an embodiment shown in FIG. 1 and FIG. 2, the optical switch unit 110 has two input ports (an input 1 and an input 2) and two output ports (an output 1 and an output 2). There are two couplers 112 at two ends of the optical switch unit 110, and a phase shifter 114 is connected between the two couplers 112. If the two input ports and the two output ports are used, the optical switch unit 110 can implement a 2x2 optical switch unit. If only one input port and the two output ports of the 2x2 optical switch unit are used, a function of a 1x2 optical switch unit can be equivalently implemented. If the two output ports and only one output port of the 2x2 optical switch unit are used, a function of a 2x1 optical switch unit can be equivalently implemented.

In an embodiment shown in FIG. 3, the optical switch unit 110 has two input ports (an input 1 and an input 2) and two output ports (an output 1 and an output 2). There are two couplers 112 at two ends of the optical switch unit 110, and two phase shifters 114 are connected between the two couplers 112. An optical path difference between the two phase shifters in the optical switch unit is changed by applying a Mach Zehnder Interferometer (MZI) principle and a thermo-optic effect, so that an optical signal can be transmitted from one of the two input ports to one of the two output ports, thereby implementing a function of a 2x2 switch unit for the optical signal. If only one input port and the two output ports of the 2x2 optical switch unit are used, a function of a 1x2 optical switch unit can be equivalently implemented. If the two output ports and only one output port of the 2x2 optical switch unit are used, a function of a 2x1 optical switch unit can be equivalently implemented.

In an implementation manner, the coupler 112 is a 50:50 optical coupler.

In the foregoing embodiment, a corresponding optical switch unit may be driven by using a driving signal of a corresponding frequency. However, in another implementation manner, in addition to a frequency of a driving signal that affects a working status of a band-pass filter, amplitude of a driving signal is also one of factors that control the working status of the filter. For example, when the optical switch unit is a low-speed optical switch (such as a thermo-optic switch), switching time of the switch is generally relatively long, that is, a response frequency is extremely low. If the low-speed optical switch is driven by using an alternating current signal whose frequency is far higher than a switching frequency of the switch, a status of the optical switch is related only to amplitude of the alternating current signal, and high-frequency fluctuation of the alternating current signal has little impact on the switch status. A thermo-optic switch of a millisecond order of magnitude is used as an example. If the thermo-optic switch is driven by using an alternating current signal in MHz (a corresponding period is of a μs order of magnitude), high-speed fluctuation of an alternating current signal can only cause little-amplitude fluctuation of a status of the optical switch, and cannot cause large impact on the status of the optical switch. The status of the optical switch significantly changes only when amplitude of the alternating current signal changes.

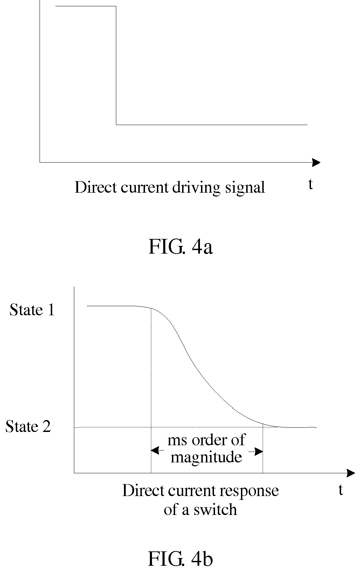

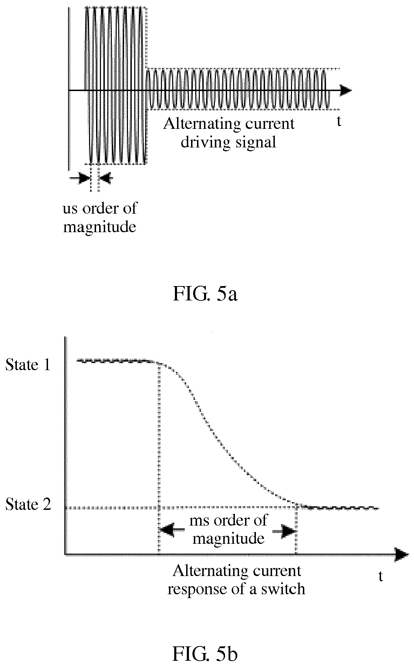

As shown in waveform diagrams of FIG. 4a and FIG. 4b, when a driving signal is a direct current driving signal, a status of an optical switch changes if amplitude of the driving signal decreases. As shown in waveform diagrams of FIG. 5a and FIG. 5b, when a driving signal is an alternating current driving signal, because a frequency of the driving signal is higher than a response frequency of a switch, a frequency change of the driving signal has little impact on a status of an optical switch. In this case, the status of the optical switch changes only when amplitude of the driving signal changes.

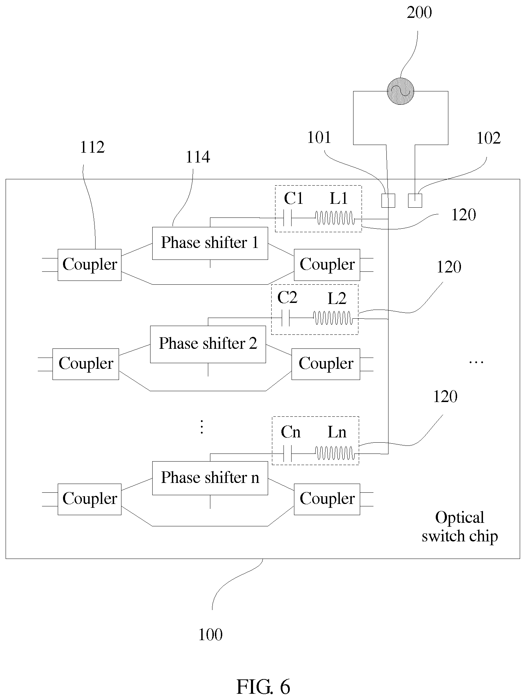

The filter 120 may be a band-pass filter in various forms. For example, in a first embodiment shown in FIG. 6, in the filter 120, a capacitor and an inductor are connected in series to a driving loop of each phase shifter 114. Impedance of an LC resonant circuit that is formed by the capacitor and the inductor is related to a driving signal frequency. When the driving signal frequency is the same as a resonance frequency of the LC resonant circuit, the impedance of the LC resonant circuit is 0. When the driving signal frequency deviates from the resonance frequency $\omega = \sqrt{\frac{1}{LC}}$ of the LC resonant circuit, the LC resonant circuit presents specific impedance. Different capacitors and inductors are connected in series to different phase shifters of the optical switch, and proper capacitance and inductance parameters are selected, so that each phase shifter is driven mainly by using a signal of one frequency, that is, a resonance frequency of an LC resonant circuit connected to the phase shifter, and is slightly affected by a signal of another frequency. The LC resonant circuit serves as a band-pass filter whose bandwidth is relatively narrow. In this embodiment, a capacitor and an inductor may be disposed on a metal layer of a chip, which is relatively easy to implement. In addition, the capacitor and the inductor do not cause power consumption, so that power consumption of the entire optical switch chip does not increase.

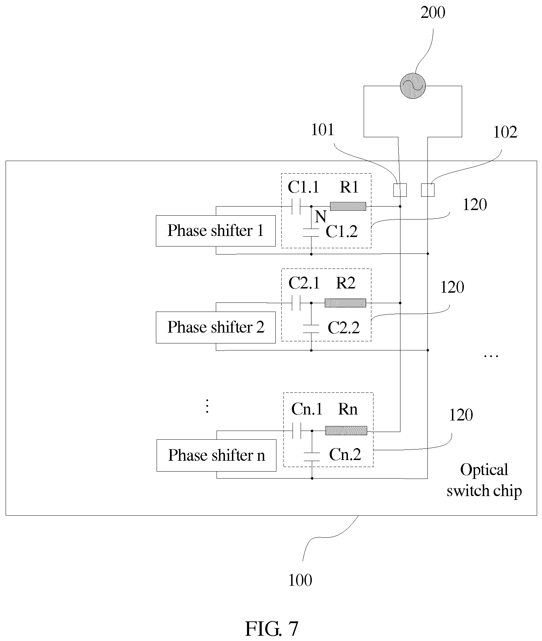

FIG. 7 shows a circuit composition diagram of a filter 120 according to a second embodiment. In the diagram, another part of an optical switch unit is omitted, and only a phase shifter part is shown. In the second embodiment shown in FIG. 7, the filter 120 includes two capacitors and one resistor. For example, a filter 120 connected to a phase shifter 1 includes a first capacitor C1.1, a second capacitor C1.2, and a resistor R1. One end of the first capacitor C1.1 is connected to the phase shifter 1, and the other end of the first capacitor C1.1 is connected to a node N. One end of the resistor R1 is connected to the node N, and the other end of the resistor R1 is connected to an electrode 101. One end of the second capacitor C1.2 is connected to the node N, and the other end of the second capacitor C1.2 and the phase shifter 1 are both connected to an electrode 102. A circuit of a filter connected to another phase shifter and a circuit of the foregoing filter 120 connected to the phase shifter 1 are the same, and only differ in a capacity of a capacitor and a resistance value of a resistor.

In FIG. 7, the phase shifter 1 and the first capacitor C1.1 form a low-pass filter, and the second capacitor C1.2 and the resistor R1 form a high-pass filter. A band-pass filtering effect may be implemented by cascading the two filters. A driving signal component in a pass band of a band-pass filter can drive the phase shifter 1 by using the filter, but another frequency component cannot drive the phase shifter 1 by using the filter or has little impact on the phase shifter 1.

Different capacitance values and resistance values are used in a loop of each phase shifter, so that different phase shifters can receive driving signals of different frequencies. Statuses of different optical switches can be controlled by controlling amplitude of signals of different frequencies that are in the driving signals.

Isolation of a band-pass filter that is in a loop of a phase shifter can be enhanced by cascading multiple levels of low-pass filters and multiple levels of high-pass filters, so that the band-pass filter is less affected by another frequency.

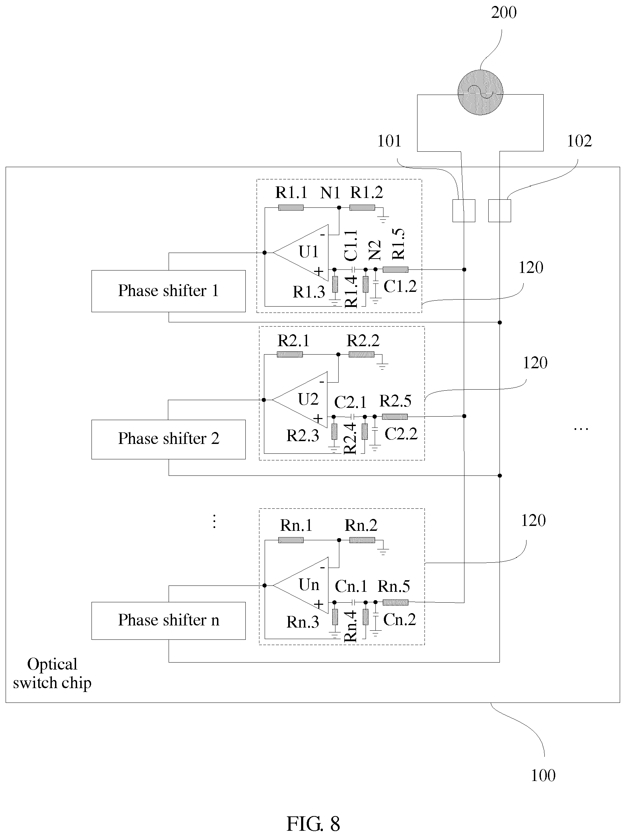

FIG. 8 shows a circuit composition diagram of a filter 120 according to a third embodiment. In the diagram, another part of an optical switch unit is omitted, and only a phase shifter part is shown. In the third embodiment shown in FIG. 8, in the filter 120, an active filter is formed by an integrated operational amplifier (U1, U2, ..., or Un), capacitors, and resistors. Specifically, a filter 120 connected to a phase shifter 1 is used as an example. The filter 120 includes an integrated operational amplifier U1, resistors R1.1, R1.2, R1.3, R1.4, and R1.5, and capacitors C1.1 and C1.2. An output end of the integrated operational amplifier U1 is connected to the phase shifter 1, and the resistor R1.1 is connected between the output end of the integrated operational amplifier U1 and a node N1. One end of the resistor R1.2 is connected to the node N1, and the other end of the resistor R1.2 is grounded. One end of the resistor R1.3 is connected to a non-inverting input end of the integrated operational amplifier U1, and the other end of the resistor R1.3 is grounded. The capacitor C1.1 is connected between the non-inverting input end of the integrated operational amplifier U1 and a node N2. The resistor R1.4 is connected between the output end of the integrated operational amplifier U1 and the node N2. One end of the capacitor C1.2 is connected to the node N2, and the other end of the capacitor C1.2 is grounded. One end of the resistor R1.5 is connected to the node N2, and the other end of the resistor R1.5 is connected to an electrode 101. A circuit of a filter connected to another phase shifter and a circuit of the foregoing filter 120 connected to the phase shifter 1 are the same, and only differ in a capacity of a capacitor and a resistance value of a resistor.

A typical active band-pass filter is formed by the capacitors and the resistors that are in a loop of the foregoing integrated operational amplifier. Generally, an outband suppression feature of an active band-pass filter is better than that of a passive filter of a same level, so that crosstalk between loops of different phase shifters can be reduced.

Isolation of a band-pass filter can be improved by using a method in which multiple levels of active band-pass filters are cascaded or multiple levels of active low-pass filters and active high-pass filters are cascaded, so as to reduce crosstalk between loops of different phase shifters.

In another implementation manner, a circuit of an active band-pass filter may be built by using another linear device (such as a triode and a field effect transistor).

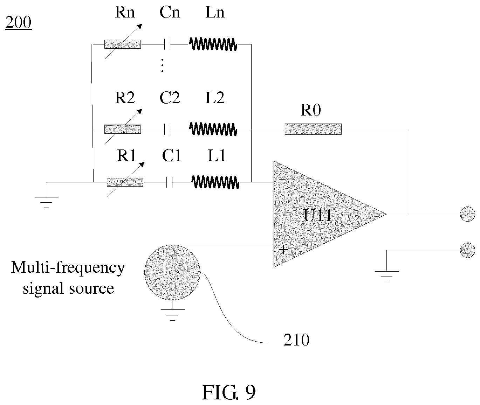

In a fourth embodiment shown in FIG. 9, a multi-frequency driving signal source 200 is an adjustable multi-frequency signal source. The multi-frequency driving signal source 200 shown in FIG. 9 includes a multi-frequency signal source 210, an integrated operational amplifier U11, a resistor R0, and multiple LC resonant circuits. Each LC resonant circuit shown in FIG. 9 includes an adjustable resistor (such as R1, R2, or Rn), a capacitor, and an inductor that are connected in series. An integrated operational amplifier, a resistor, a capacitor, and an inductor form a codirectional amplification circuit. An LC resonant circuit that includes a capacitor C1 and an inductor L1 is used as an example. When a frequency of a signal generated by the multi-frequency signal source is a resonance frequency $\omega 1 = \sqrt{\frac{1}{L1C1}}$ of the LC resonant circuit, impedance of the LC resonant circuit is 0. When a frequency of a signal generated by the multi-frequency signal source deviates from the resonance frequency $\omega 1$, the LC resonant circuit presents specific impedance.

Likewise, other LC resonant circuits in the diagram also have corresponding resonance frequencies $\omega 2 = \sqrt{\frac{1}{L2C2}}$, $\omega 3 = \sqrt{\frac{1}{L3C3}}$, ..., and $\omega n = \sqrt{\frac{1}{LnCn}}$.

If proper inductance and capacitance values are selected, each LC resonant circuit presents a short-circuited state when receiving a signal whose frequency is the same as a resonance frequency of the LC resonant circuit, and presents extremely high impedance for a signal of another frequency, which is equivalent to an open circuit state. The amplification circuit that includes the integrated operational amplifier, the resistor, the capacitor, and the inductor amplifies a signal of the frequency $\omega 1$ by a multiple of R0/R1, amplifies a signal of the frequency $\omega 2$ by a multiple of R0/R2, and amplifies a signal of the frequency $\omega n$ by a multiple of R0/Rn.

All the R1, R2, and Rn are adjustable resistors. Amplification multiples of different frequency components amplified by the amplification circuit can be adjusted by adjusting different adjustable resistors, and an amplification multiple of another frequency component is not affected. In this way, amplitude of different frequencies of output signals can be independently adjusted.

Output signals of the multi-frequency signal source 210 may include only frequency components of $\omega 1$ , $\omega 2$ , ..., and $\omega n$ , or may include another frequency component. The multi-frequency signal source 210 may be a wide-spectrum noise source.

The LC resonant circuit shown in FIG. 9 may be replaced by another band-stop filter.

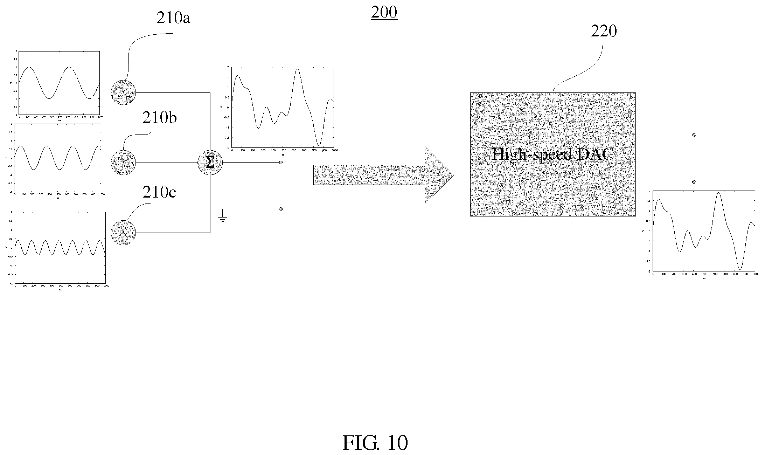

In a fifth embodiment shown in FIG. 10, the multi-frequency driving signal source 200 includes signal sources 210a, 210b, and 210c that provide signals of different frequencies. A time domain waveform obtained by superimposing the signals that are generated by the signal sources is output by a high-speed DAC 220, and a signal output by the high-speed DAC 220 includes various driving signal components of a required frequency.

When a status of an optical switch needs to be changed, a time domain waveform obtained by superimposing all frequency components needs to be recalculated, and the high-speed DAC re-sends a required driving signal according to a new waveform.

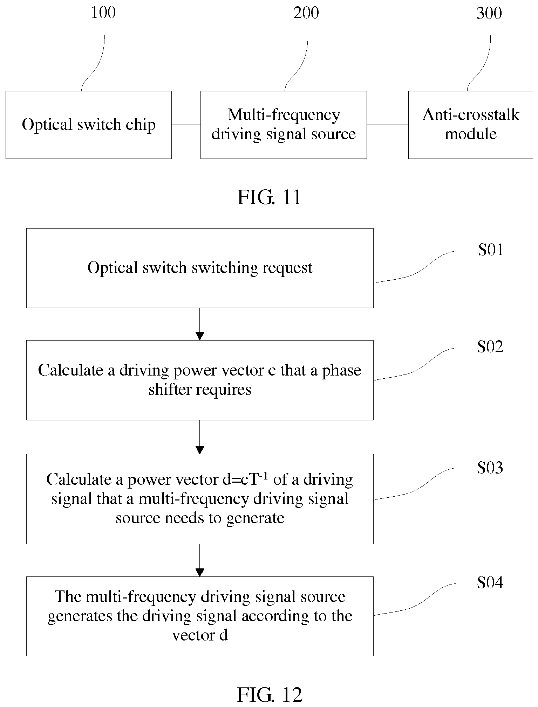

In a sixth embodiment shown in FIG. 11, an optical switch driving module further includes an anti-crosstalk module 300. The anti-crosstalk module 300 is configured to reduce crosstalk between driving loops of different phase shifters. A specific anti-crosstalk method is shown in FIG. 12, and includes the following steps:

S01. Send an optical switch status switching request to a multi-frequency driving signal source 200.

S02. Calculate a driving power vector c that a corresponding phase shifter requires.

S03. Calculate a power vector $d=cT^{-1}$ of a driving signal that the multi-frequency driving signal source 200 needs to generate.

S04. The multi-frequency driving signal source 200 generates the driving signal according to the vector d.

If phase shifters of several optical switch units that share a pair of electrodes are respectively driven by driving signals of frequencies $\omega 1$ , $\omega 2$ , ..., and $\omega n$ , output powers of multi-frequency driving signals of these frequencies are respectively a1, a2, ..., and an, and after the driving signals pass through a filter, powers received by the phase shifters are respectively b1, b2, ..., and bn.

It is assumed that specific crosstalk exists in the filter, and crosstalk between adjacent channels is p. That is, crosstalk of a power $p\omega 2$ of a power $\omega 2$ exists in a phase shifter that receives $\omega 1$ and a phase shifter that receives $\omega 3$ , which may be expressed by using a matrix, that is b=Ta, where b=[b1, b2, ..., bn] and a=[al, a2, ..., an].

$$
T = \begin{bmatrix}
1-2p & p & 0 & 0 & 0 & 0 & 0 & 0 \\
p & 1-2p & p & 0 & \cdots & . & . & 0 \\
0 & p & 1-2p & p & 0 & . & . & . \\
0 & 0 & p & . & . & 0 & 0 & . \\
\cdots & 0 & 0 & .. & . & . & 0 & 0 \\
0 & \cdots & 0 & 0 & . & . & p & 0 \\
0 & 0 & \cdots & 0 & 0 & p & 1-2p & p \\
0 & 0 & 0 & .. & 0 & 0 & p & 1-2p
\end{bmatrix}
$$

The foregoing matrix is a transmission function of a change from a signal power output by a multi-frequency signal source to a signal power received by a phase shifter. If a power vector of a driving signal that the phase shifter requires is c=[cl, c2, ..., cn], a power $d=cT^{-1}$ of each required frequency component of the multi-frequency signal source may be calculated by using a suppressed transmission function T, and then a power vector d of a driving signal that the multi-frequency signal source needs to generate may be calculated. A problem of crosstalk between driving signals of different phase shifters that is caused by poor isolation of a filter may be relieved by using this algorithm.

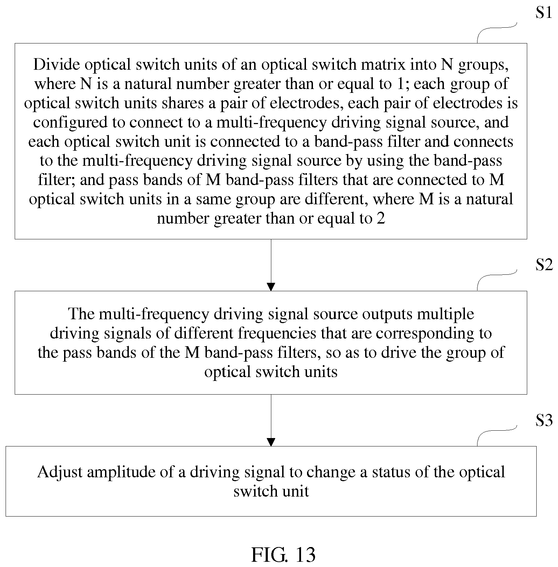

Referring to FIG. 13, the present invention further discloses an optical switch driving method that is based on the foregoing optical switch driving module, where the method includes the following steps:

S1. Divide optical switch units of an optical switch matrix into N groups, where N is a natural number greater than or equal to 1; each group of optical switch units shares a pair of electrodes, each pair of electrodes is configured to connect to a multi-frequency driving signal source, and each optical switch unit is connected to a band-pass filter and connects to the multi-frequency driving signal source by using the band-pass filter; and pass bands of M band-pass filters that are connected to M optical switch units in a same group are different, where M is a natural number greater than or equal to 2.

S2. The multi-frequency driving signal source outputs multiple driving signals of different frequencies that are corresponding to the pass bands of the M band-pass filters, so as to drive the group of optical switch units.

S3. When the optical switch unit is a low-speed switch, adjust amplitude of a driving signal to switch a status of the optical switch unit according to a switching request.

In the foregoing optical switch driving module and the optical switch driving method, an optical switch is driven by using an alternating current signal, and different optical switches are driven by using signals of different frequencies. This method is used to enable different optical switches to share a pair of chip electrodes, so as to effectively relieve a problem that driving electrodes around a large-scale optical switch chip are insufficient.

The foregoing descriptions are merely various specific embodiments of the present invention, and the solutions described in the embodiments may be used separately or may be used together. Variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  An optical switch driving module, wherein the optical switch driving module comprises an optical switch chip and a multi-frequency driving signal source that is connected to the optical switch chip; the optical switch chip comprises an optical switch matrix, and optical switch units of the optical switch matrix are divided into N groups, wherein N is a natural number greater than or equal to 1; each group of optical switch units shares a pair of electrodes, each pair of electrodes is configured to connect to a multi-frequency driving signal source, and each optical switch unit is connected to a band-pass filter and connects to the multi-frequency driving signal source by using the band-pass filter; pass bands of M band-pass filters that are connected to M optical switch units in a same group are different, wherein M is a natural number greater than or equal to 2; and the multi-frequency driving signal source outputs multiple driving signals of different frequencies that are respectively corresponding to the pass bands of the M band-pass filters, so as to drive the group of optical switch units.

2.  The optical switch driving module according to claim 1, wherein the optical switch unit comprises a coupler and a phase shifter, one end of the band-pass filter is connected to the phase shifter, the other end of the band-pass filter is connected to one of the pair of electrodes, and the other one of the pair of electrodes is a common end; and two ends of the multi-frequency driving signal source are respectively connected to the pair of electrodes.

3.  The optical switch driving module according to claim 1 or 2, wherein the band-pass filter comprises a capacitor C and an inductor L that are connected in series, and a resonance frequency of the band-pass filter is $\omega = \sqrt{\frac{1}{LC}}$.

4.  The optical switch driving module according to claim 1 or 2, wherein the filter comprises a first capacitor, a second capacitor, and a resistor; one end of the first capacitor is connected to the phase shifter, and the other end of the first capacitor is connected to a node; one end of the resistor is connected to the node, and the other end of the resistor is connected to one of the pair of electrodes; one end of the second capacitor is connected to the node, and the other end of the second capacitor and the phase shifter are both connected to the other one of the pair of electrodes; and the phase shifter and the first capacitor form a low-pass filter, the second capacitor and the resistor form a high-pass filter, and the band-pass filter is a filter formed by cascading one or multiple low-pass filters and one or multiple high-pass filters.

5.  The optical switch driving module according to claim 1 or 2, wherein the band-pass filter comprises one level or multiple levels of active filters, and the active filter comprises an integrated operational amplifier and multiple capacitors and resistors that are connected to the integrated operational amplifier.

6. The optical switch driving module according to claim 1, wherein amplitude of a signal output by the multi-frequency driving signal source is adjustable.

7. The optical switch driving module according to claim 6, wherein the multi-frequency driving signal source comprises a multi-frequency signal source, an integrated operational amplifier, and multiple LC resonant circuits; the multi-frequency signal source is connected to a non-inverting input end of the integrated operational amplifier, the LC resonant circuit is connected to an inverting input end of the integrated operational amplifier, and a resistor is connected between the inverting input end and an output end of the integrated operational amplifier; each LC resonant circuit comprises an adjustable resistor; and when a frequency of a signal output by the multi-frequency signal source is the same as a resonance frequency of the LC resonant circuit, an amplification multiple of the signal output by the multi-frequency signal source is a ratio of a resistance value of the resistor to a resistance value of the adjustable resistor.

8. The optical switch driving module according to claim 1, wherein the multi-frequency driving signal source comprises multiple signal sources that output signals of different frequencies; and after being superimposed, the signals output by the multiple signal sources are output by a high-speed DAC, wherein a signal output by the high-speed DAC comprises components of driving signals of different frequencies.

9. The optical switch driving module according to claim 1, wherein the optical switch driving module further comprises an anti-crosstalk module; when receiving an optical switch status switching request, the anti-crosstalk module calculates a driving power that a corresponding phase shifter requires, and calculates a driving signal power that a multi-frequency signal source needs to generate; and the multi-frequency signal source generates a driving signal according to the driving signal power that the multi-frequency signal source needs to generate.

10. An optical switch chip that comprises multiple optical switch units, wherein the multiple optical switch units are divided into N groups, and N is a natural number greater than or equal to 1; each group of optical switch units shares a pair of electrodes, each pair of electrodes is configured to connect to a multi-frequency driving signal source, and each optical switch unit is connected to a band-pass filter and connects to the electrodes by using the band-pass filter; and pass bands of M band-pass filters that are connected to M optical switch units in a same group are different, wherein M is a natural number greater than or equal to 2.

11. The optical switch chip according to claim 10, wherein the optical switch unit comprises a coupler and a phase shifter, one end of the band-pass filter is connected to the phase shifter, the other end of the band-pass filter is connected to one of the pair of electrodes, and the other one of the pair of electrodes is a common end; and two ends of the multi-frequency driving signal source are respectively connected to the pair of electrodes.

12. The optical switch chip according to claim 10 or 11, wherein the band-pass filter comprises a capacitor C and an inductor L that are connected in series, and a resonance frequency of the band-pass filter is $\omega = \sqrt{\frac{1}{LC}}$.

13. The optical switch chip according to claim 10 or 11, wherein the filter comprises a first capacitor, a second capacitor, and a resistor; one end of the first capacitor is connected to the phase shifter, and the other end of the first capacitor is connected to a node; one end of the resistor is connected to the node, and the other end of the resistor is connected to one of the pair of electrodes; one end of the second capacitor is connected to the node, and the other end of the second capacitor and the phase shifter are both connected to the other one of the pair of electrodes; and the phase shifter and the first capacitor form a low-pass filter, the second capacitor and the resistor form a high-pass filter, and the band-pass filter is a filter formed by cascading one or multiple low-pass filters and one or multiple high-pass filters.

14. The optical switch chip according to claim 10 or 11, wherein the band-pass filter comprises one or multiple active filters, and the active filter comprises an integrated operational amplifier and multiple capacitors and resistors that are connected to the integrated operational amplifier.

15. An optical switch driving method that is used to drive an optical switch unit in an optical switch matrix, wherein the optical switch driving method comprises:

dividing optical switch units of the optical switch matrix into N groups, wherein N is a natural number greater than or equal to 1; each group of optical switch units shares a pair of electrodes, each pair of electrodes is configured to connect to a multi-frequency driving signal source, and each optical switch unit is connected to a band-pass filter and connects to the multi-frequency driving signal source by using the band-pass filter; and pass bands of M band-pass filters that are connected to M optical switch units in a same group are different, wherein M is a natural number greater than or equal to 2; and

outputting, by the multi-frequency driving signal source, multiple driving signals of different frequencies that are corresponding to the pass bands of the M band-pass filters, so as to drive the group of optical switch units.

16. The optical switch driving method according to claim 15, wherein the optical switch driving method further comprises: when the optical switch unit is a low-speed switch, adjusting amplitude of a driving signal to drive the optical switch unit.

17. The optical switch driving method according to claim 15, wherein each optical switch unit comprises a coupler and a phase shifter, and the band-pass filter is formed by connecting a capacitor and an inductor in series to a driving loop of each phase shifter.

18. The optical switch driving method according to claim 15, wherein each optical switch unit comprises a coupler and a phase shifter, and the band-pass filter is formed by cascading one or multiple low-pass filters and one or multiple high-pass filters.

19. The optical switch driving method according to claim 15, wherein the band-pass filter comprises an active filter.

20. The optical switch driving method according to claim 19, wherein the band-pass filter is formed by cascading multiple levels of active band-pass filters or cascading multiple levels of active low-pass filters and active high-pass filters.

21. The optical switch driving method according to any one of claims 15 to 20, wherein the optical switch driving method further comprises: when an optical switch status switching request is received, calculating a driving power that a phase shifter of an optical switch unit requires; calculating driving signal power that a multi-frequency signal source needs to generate; and generating, by the multi-frequency signal source, a driving signal according to the driving signal power that the multi-frequency signal source needs to generate.

FIG. 1

EP 3 226 576 A1

FIG. 2

FIG. 3

Direct current driving signal     t

FIG. 4a

State 1

State 2

ms order of
magnitude

Direct current response     t
of a switch

FIG. 4b

Alternating current
driving signal

t

us order of
magnitude

FIG. 5a

State 1

State 2

ms order of
magnitude

Alternating current
response of a switch

t

FIG. 5b

FIG. 6

FIG. 7

FIG. 8

FIG. 9

200

220

High-speed DAC

Σ

210a

210b

210c

FIG. 10

100             200             300

| Optical switch chip | Multi-frequency driving signal source | Anti-crosstalk module |

FIG. 11

| Optical switch switching request | S01 |

↓

| Calculate a driving power vector c that a phase shifter requires | S02 |

↓

| Calculate a power vector $d=cT^{-1}$ of a driving signal that a multi-frequency driving signal source needs to generate | S03 |

↓

| The multi-frequency driving signal source generates the driving signal according to the vector d | S04 |

FIG. 12

Divide optical switch units of an optical switch matrix into N groups, where N is a natural number greater than or equal to 1; each group of optical switch units shares a pair of electrodes, each pair of electrodes is configured to connect to a multi-frequency driving signal source, and each optical switch unit is connected to a band-pass filter and connects to the multi-frequency driving signal source by using the band-pass filter; and pass bands of M band-pass filters that are connected to M optical switch units in a same group are different, where M is a natural number greater than or equal to 2

S1

The multi-frequency driving signal source outputs multiple driving signals of different frequencies that are corresponding to the pass bands of the M band-pass filters, so as to drive the group of optical switch units

S2

Adjust amplitude of a driving signal to change a status of the optical switch unit

S3

FIG. 13

# INTERNATIONAL SEARCH REPORT

| International application No. |
|---|
| **PCT/CN2014/094229** |

## A. CLASSIFICATION OF SUBJECT MATTER

H04Q 11/00 (2006.01) i

According to International Patent Classification (IPC) or to both national classification and IPC

## B. FIELDS SEARCHED

Minimum documentation searched (classification system followed by classification symbols)

H04Q11

Documentation searched other than minimum documentation to the extent that such documents are included in the fields searched

Electronic data base consulted during the international search (name of data base and, where practicable, search terms used)

CNKI, CNTXT, CNABS, VEN: optical switch, optical switch array, multi, share, multiplex, compound, array, band-pass filter, all-optical switching, control signal, driving signal, optic+, switch+, bs, pass, BPF, frequenc+, all, network, swich+, control+, driv+, signal, filter

## C. DOCUMENTS CONSIDERED TO BE RELEVANT

| Category* | Citation of document, with indication, where appropriate, of the relevant passages | Relevant to claim No. |
|---|---|---|
| A | CN 102291634 A (UNIVERSITY OF ELECTRONIC SCIENCE AND TECHNOLOGY OF CHINA), 21 December 2011 (21.12.2011), description, paragraph 38, and figure 3 | 1-21 |
| A | CN 103955147 A (UNIVERSITY OF ELECTRONIC SCIENCE AND TECHNOLOGY OF CHINA), 30 July 2014 (30.07.2014), the whole document | 1-21 |
| A | CN 104159170 A (WUHAN GUANGYING TECHNOLOGY CO., LTD.), 19 November 2014 (19.11.2014), the whole document | 1-21 |
| A | CN 1417960 A (ALCATEL INC.), 14 May 2003 (14.05.2003), the whole document | 1-21 |
| A | W0 2014019721 A1 (ALCATEL LUCENT), 06 February 2014 (06.02.2014), the whole document | 1-21 |
| A | US 7333686 B1 (AVANEX CORP.), 19 February 2008 (19.02.2008), the whole document | 1-21 |

☐ Further documents are listed in the continuation of Box C.          ☒ See patent family annex.

| \* Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 September 2015 (09.09.2015) | **24 September 2015 (24.09.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Zhi** Telephone No.: (86-10) **62085561** |
|---|---|

Form PCT/ISA/210 (second sheet) (July 2009)

## INTERNATIONAL SEARCH REPORT
### Information on patent family members

| International application No. |
| --- |
| **PCT/CN2014/094229** |

| Patent Documents referred in the Report | Publication Date | Patent Family | Publication Date |
| --- | --- | --- | --- |
| CN 102291634 A | 21 December 2011 | None | |
| CN 103955147 A | 30 July 2014 | None | |
| CN 104159170 A | 19 November 2014 | None | |
| CN 1417960 A | 14 May 2003 | FR 2830709 B1 | 30 January 2004 |
| | | US 7324751 B2 | 29 January 2008 |
| | | EP 1303161 A1 | 16 April 2003 |
| | | FR 2830709 A1 | 11 April 2003 |
| | | US 2003067650 A1 | 10 April 2003 |
| WO 2014019721 A1 | 06 February 2014 | EP 2693769 B1 | 08 October 2014 |
| | | EP 2693769 A1 | 05 February 2014 |
| | | KR 20150038526 A | 08 April 2015 |
| | | CN 104365115 A | 18 February 2015 |
| | | US 2015188657 A1 | 02 July 2015 |
| US 7333686 B1 | 19 February 2008 | None | |

Form PCT/ISA/210 (patent family annex) (July 2009)